# EUROPÄISCHE PATENTSCHRIFT

(11) **EP 2 193 342 B1**
(45) Veröffentlichungstag und Bekanntmachung des Hinweises auf die Patenterteilung: **22.04.2015**
(21) Anmeldenummer: 08804425.0
(22) Anmeldetag: 18.09.2008
(51) Int. Cl.: G01D 18/00

(54) **ELEKTRONISCHE SCHALTUNG ZUR KORREKTUR ZUMINDEST EINES DIGITALEN MESSSIGNALS**
ELECTRONIC CIRCUIT FOR CORRECTING AT LEAST ONE DIGITAL MEASUREMENT SIGNAL
CIRCUIT ÉLECTRONIQUE POUR LA CORRECTION D'AU MOINS UN SIGNAL DE MESURE NUMÉRIQUE

(30) Priorität: 21.09.2007 DE 102007045416
(43) Veröffentlichungstag der Anmeldung: 09.06.2010
(73) Patentinhaber: Continental Teves AG & Co. OHG, 60488 Frankfurt (DE)
(72) Erfinder: MICHEL, Frank, 61191 Rosbach V.d. Höhe (DE); TRAPP, René, 66887 Föckelberg (DE); OEHLER, Peter, 60314 Frankfurt (DE)
(86) Internationale Anmeldenummer: PCT/EP2008/062490
(87) Internationale Veröffentlichungsnummer: WO 2009/040301

(56) Entgegenhaltungen:
- DE-A1-102004 013 123
- GB-A- 2 051 979
- JP-A- 9 247 393

## Beschreibung

Die Erfindung betrifft eine elektronische Schaltung gemäß Oberbegriff von Anspruch 1 sowie die Verwendung der elektronischen Schaltung in einem Kraftfahrzeugbremssystem.

Druckschrift WO 2007/080163 A2 schlägt einen elektronischen Regler für Kraftfahrzeugregelungssysteme vor, der in einer PWM-Ventilansteuerungsschaltung den Strom jeweils im Einschalt- und Rezirkulationspfad mittels eines Sense-FETs und eines Sigma-Delta-Modulators misst, wobei das digitale Ausgangsignal der Sigma-Delta-Modulatoren jeweils mit einem Korrekturwert bzw. Ausgleichsfaktor zur Korrektur des jeweiligen digitalen Messsignals multipliziert wird. Diese Multiplikation benötigt eine relativ aufwändige bzw. eine relativ viele Bauteile umfassende Multiplikatorschaltung.

Die Aufgabe der vorliegenden Erfindung besteht nun darin, eine elektronische Schaltung zur Korrektur zumindest eines digitalen Messsignals vorzuschlagen, welche eine relativ geringe Anzahl an elektronischen Bauelementen umfasst und deshalb relativ kostengünstig zu realisieren ist.

Die Aufgabe wird erfindungsgemäß gelöst durch die elektronische Schaltung gemäß Anspruch 1.

Der Erfindung liegt der Gedanke zu Grunde, ein digitales Messsignal umfassend eine binäre Wertefolge zu korrigieren, indem die Korrekturoperation bzw. die für die digitale Korrektur erforderliche Signalverarbeitung mit einem digitalen Korrekturdatum auf wenigstens eine Addition zurückgeführt wird und die Korrekturschaltung wenigstens einen Multiplexer und zumindest ein Addierelement umfasst.

Die Verwendung mindestens eines Multiplexers und mindestens eines Addierelementes hat gegenüber anderen Signalverarbeitungsschaltungen zur Korrektur eines digitalen Signals den Vorteil, dass diese Korrekturschaltung relativ wenige elektronische Bauelemente umfassen muss und somit relativ kostengünstig ist. Außerdem kann die für die Korrekturschaltung genutzte Chipfläche relativ klein gehalten werden.

Das Korrekturdatum ist vorzugsweise ein Korrekturfaktor. Korrektur- bzw. Trimmfaktoren benötigen normalerweise ein Multiplizierelement, welches meistens wesentlich mehr elektronische Bauelemente umfasst und somit höhere Kosten verursacht.

Unter einem Korrekturdatum wird bevorzugt ein digitaler Wert, insbesondere ein binärer Wert umfassend eine definierte Anzahl von Stellen, verstanden.

Unter einer binären Datenfolge wird zweckmäßigerweise eine Bitfolge bzw. ein Bitstream verstanden.

Es ist zweckmäßig, dass die elektronische Schaltung Teil eines elektronischen Reglers für Kraftfahrzeuge ist, insbesondere eines elektronischen Reglers gemäß Druckschrift WO 2007/080163 A2, und der Sigma-Delta-Modulator ein analoges Messsignal eines Laststroms, welcher durch eine im Wesentlichen induktive Last einer Ventilansteuerungsschaltung fließt in ein digitales Messsignal umwandelt, wobei die Ventilansteuerungsschaltung diesen Laststrom mittels einer Puls-Weiten-Modulation regelt. Das analoge Messsignal wird dabei direkt oder indirekt durch zumindest einen Sense-FET bereitgestellt.

An den Eingängen des Multiplexers liegen bevorzugt ein binäres Null-Wort und das Korrekturdatum an, wobei das digitale Messsignal den Selekteingang des Multiplexers ansteuert. Der Ausgang des Multiplexers ist dabei mit einem ersten Eingang des Addierelements direkt oder indirekt verbunden, und die Korrekturschaltung weist zusätzlich zumindest ein erstes Register auf, dessen Eingang mit dem Ausgang des Addierelements und dessen Ausgang mit einem zweiten Eingang des Addierelements verbunden ist.

Das digitale Messsignal ist vorzugsweise in digitale Teil-Messsignale unterteilbar bzw. umfasst mehrere digitale Teil-Messsignale, welche jeweils eine binäre Wertefolge definierter Länge umfassen bzw. dieser entsprechen.

Unter einem Nullwort wird bevorzugt ein digitaler Wert verstanden, dessen Bits alle den Wert "0" aufweisen.

Unter einem digitalen Messsignal wird zweckmäßigerweise auch ein digitales Teil-Messsignal verstanden.

Es ist bevorzugt, dass das jeweilig korrigierte digitale Teil-Messsignal, welches am Ende eines jeweiligen Korrekturzyklus im ersten Register gespeichert ist, in einem zweiten Register gespeichert wird und der Speicherinhalt des ersten Registers im Wesentlichen gleichzeitig zur Durchführung eines neuen, nachfolgenden Korrekturzyklus mittels eines Rücksetzeingangs zurückgesetzt und/oder gelöst wird, der in Abhängigkeit des Anlegens eines neuen, nachfolgenden digitalen Teil-Messsignals an den Selekteingang des Multiplexers, angesteuert wird.

Die elektronische Schaltung weist zweckmäßigerweise zwei Messkanäle auf, deren digitale Messsignale, welche jeweils digitale Teil-Messsignale umfassen, an die Korrekturschaltung übertragen werden, welche einen ersten, einen zweiten und einen dritten, gemeinsamen Multiplexer sowie zumindest ein Addierelement und ein erstes Register umfasst, wobei das jeweilige digitale Teil-Messsignal des erstens Kanals den Selekteingang des erstens Multiplexers und das jeweilige digitale Teil-Messsignal des zweiten Kanals den Selekteingang des zweiten Multiplexers ansteuert, an deren Eingängen jeweils das Korrekturdatum und ein binäres Null-Wort anliegen, wobei die Ausgänge des ersten und des zweiten Multiplexers an den Eingängen des dritten Multiplexers anliegen, dessen Selekteingang von einem Phasensignal angesteuert wird und dessen Ausgang mit dem ersten Eingang des Addierelements verbunden ist, wobei der zweite Eingang des Addierelements mit dem Ausgang des ersten Registers verbunden ist und der Ausgang der Addierelements mit dem Eingang des ersten Registers verbunden ist. Insbesondere ist der erste Messkanal einem Einschaltpfad und der zweite Messkanal einem Rezirkulationspfad der einen bzw. der jeweiligen Puls-Weiten-Modulations-Ventilansteuerungsschaltung zugeordnet. Der zeitliche Verlauf des Phasensignals ist vom zeitlichen Verlauf der Puls-Weiten-Modulation abhängig, wodurch die beiden Messpfade besonders bevorzugt bezüglich der jeweiligen Einschaltzeit bzw. der jeweiligen aktiven Zeit gewichtet sind. Dabei wird der dritte, gemeinsame Multiplexer ganz besonders bevorzugt im Wesentlichen abwechselnd angesteuert und ermöglicht somit eine Korrektur der digitalen Messsignale beider Messkanäle.

Die Korrekturschaltung weist bevorzugt zusätzlich jeweils ein dem Ausgang des ersten und zweiten Multiplexers nachgeschaltetes Addierelement und Register, insbesondere gemeinsam als Zähler ausgebildet, zur zusätzlichen separaten Korrektur der digitalen Messsignale des erstens und des zweiten Messkanals auf.

Jeweils ein Addierelement und ein mit diesem direkt verbundenes Register bilden vorzugsweise jeweils ein Zählelement bzw. eine Mittelwertbildungseinrichtung, welche insbesondere einem digitalen Tiefpass erster Ordnung entspricht.

Das eine oder die mehreren Register werden bevorzugt getaktet betrieben.

Die elektronische Schaltung umfasst eine Korrekturschaltung, welche die Möglichkeit einer Korrektur bzw. Trimmung mindestens eines digitalen Messsignals bietet. Die Parametrisierung dieser Trimmung bzw. Korrektur findet vorzugsweise in einem Testmode statt, beispielsweise im Rahmen der Produktion bzw. beim anschließenden Testen der elektronischen Schaltung oder des elektronischen Geräts bzw. Systems, welches die elektronische Schaltung umfasst. Zum Testen der Messkanäle wird zweckmäßigerweise ein definiertes elektrisches Testsignal eingestellt, welches gemessen wird. Aus der Abweichung des resultierenden digitalen Messsignals vom Testsignal ergibt sich ein digitaler Korrekturwert bzw. ein Korrekturdatum, welches vorzugsweise ein Korrektur- bzw. Trimmfaktor ist, der insbesondere multipliziert mit dem digitalen Messsignal, das jeweilige Testsignal ergibt.

Die Erfindung bezieht sich außerdem auf die Verwendung der elektronischen Schaltung in einem Kraftfahrzeugbremssystem.

Die erfindungsgemäße elektronische Schaltung werden bevorzugt in elektronischen Kraftfahrzeugbremssystemen, bei denen elektromagnetische Hydraulikventile über Puls-Weiten-Modulation in Ventilansteuerungsschaltungen angesteuert werden, zur Einstellung des Hydraulikdrucks in Radbremsen des Kraftfahrzeugs, verwendet. Alternativ ist eine Verwendung in einem servo-unterstützten Lenkungssystem eines Kraftfahrzeuges vorgesehen, wobei der erfindungsgemäße elektronische Regler das mindestens eine Hydraulikventil ansteuert.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung
- Fig. 1: ein Ausführungsbeispiel der Korrekturschaltung zur Korrektur des digitalen Messsignals eines Messkanals,
- Fig. 2: und eine beispielhafte Korrekturschaltung zur gemeinsamen und separaten Korrektur der digitalen Messsignale zweier Messkanäle.

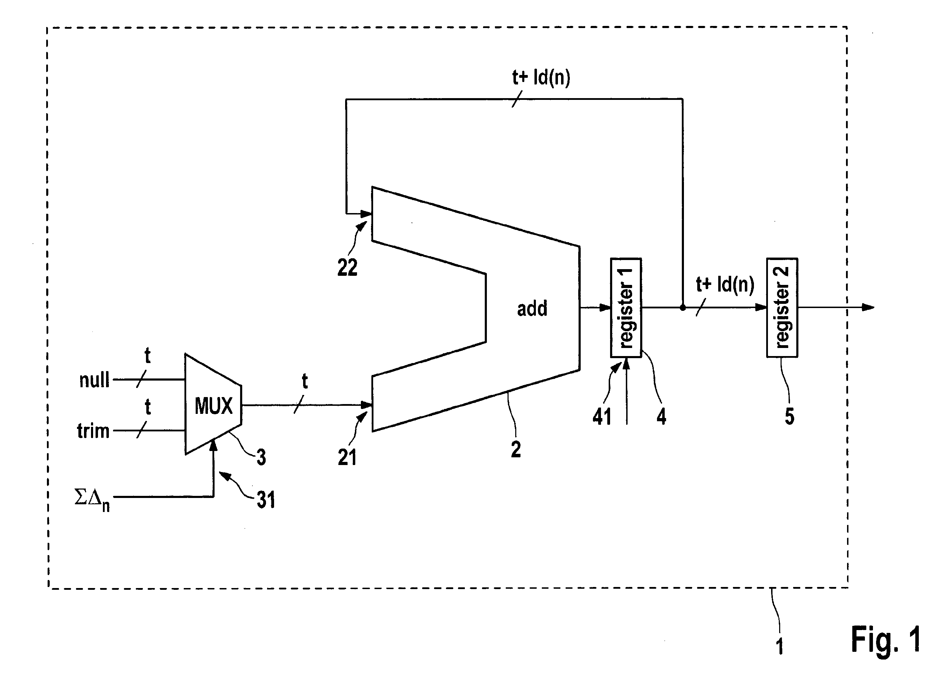

Fig. 1 zeigt beispielhafte Korrekturschaltung 1 in welcher ein digitales Teil-Messsignal in Form einer binären Wertefolge ΣΔₙ der Länge n, eines Messkanals der elektronischen Schaltung, korrigiert wird. Das digitale Teil-Messsignal ΣΔₙ bzw. die binären Wertefolge ΣΔₙ steuert den Selekteingang 31 des Multiplexers 3 an, an dessen Eingängen ein t-stelliges Korrekturdatum trim und ein t-stellige binäres Nullwort null anliegen. Bei einer "1" des Teil-Messsignals ΣΔₙ wird das Datenwort des Korrekturdatums trim und bei einer "0" des Teil-Messsignals ΣΔₙ das binäre Nullwort null durchgeschaltet bzw. ausgewählt. Der Ausgang der Multiplexers 3 liegt am ersten Eingang 21 des Addierelements 2 an. Addierelement 2 ist ausgangsseitig mit dem Eingang des ersten Registers 4 verbunden, welche über den Ausgang, eingangsseitig 22 mit Addierelement 2 rückgekoppelt ist. Register 4 umfasst t+ld(n) Stellen bzw. kann ebenso viele Stellen speichern und Addierelement 2 kann entsprechend t+ld(n)-stellige, binäre Summanden addieren. Die Multiplikation des beispielgemäßen binären Korrekturfaktors bzw. Korrekturdatums trim mit der binären Wertefolge ΣΔₙ wird also mittels mehrerer Additionen durchgeführt, wobei der Korrekturfaktor in Abhängigkeit des binären Werts jeder Stelle der binären Wertefolge gewichtet wird und mit den jeweils selektierten Daten trim oder null ein Additionszyklus von n-Takten durchgeführt wird. Addierelement 2 und erstes Register 4 entsprechend dabei im Wesentlichen einem Zähler. Nach jeweils n-Takten ist somit das korrigierte Teil-Messsignal bzw. die korrigierte binäre Wertefolge im ersten Register 4 gespeichert, wonach mittels Rücksetzeingang 41 der Speicherinhalt des ersten Registers 4 an das zweite Register 5 übertragen wird und dieser gleichzeitig zur Durchführung des anschließenden, nächsten Korrekturzyklus gelöscht wird. Der Speicherinhalt von Register 5 steht zur weiteren Signalverarbeitung des jeweiligen korrigierten Teil-Messsignals zur Verfügung.

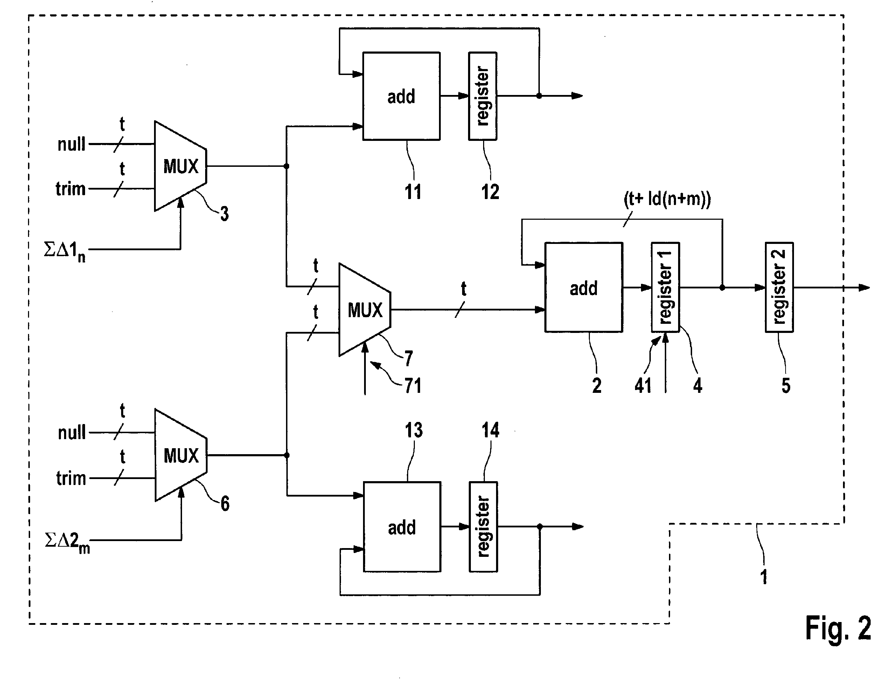

In Fig. 2 ist ein Ausführungsbeispiel der Korrekturschaltung 1 veranschaulicht, welche die digitalen Messsignale bzw. Teil-Messsignale ΣΔ1 und ΣΔ2 von zwei Messkanälen, die einerseits dem Einschaltpfad und andererseits dem Rezirkulationspfad einer PWM-Ventilansteuerungsschaltung zugeordnet sind, korrigiert. Die jeweilige Stelle bzw. das jeweilige Bit der digitalen, binären Teil-Messsignale ΣΔ1 und ΣΔ2 mit n bzw. m Bits wählt bei Anliegen einer "1" am Selekteingang des jeweiligen Multiplexers 3 und 6 das Korrekturdatum trim und bei Anliegen einer "0" das binäre Nullwort null aus. Das jeweilige Ausgangssignal der beiden Multiplexer 3 und 6 wird sowohl an die Eingänge eines gemeinsamen Multiplexers 7, also auch an zwei separate Zählerelemente zur separaten Korrektur der beiden einzelnen digitalen Teil-Messsignale ΣΔ1 und ΣΔ2, bestehend aus einem Addierelement 11, 13 mit rückgekoppeltem Register 12, 14, übertragen. Multiplexer 7 wird durch Phasensignal 71 angesteuert, welches beispielgemäß ein binäres Signal ist, dessen jeweiliger Wert davon abhängig ist, welcher Messkanal bzw. ob der Rezirkulations- oder der Einschaltpfad aktiv ist. Daher schaltet Multiplexer 7 beispielgemäß im Wesentlichen abwechselnd die beiden Eingangssignale durch und überträgt diese an Addierelement 2 und erstes Register 4, welche wie in Fig. 1 erläutert ein Korrektursignal bilden. Dieses Korrektursignal, welches in erstem Register 4 gespeichert ist und nach durchlaufenem Korrekturzyklus an zweites Register 5 übertragen wird kann alternativ ein korrigiertes Teil-Messsignal eines Kanals oder beispielgemäß ein gemeinsames korrigiertes Messsignal umfassend jeweils ein korrigiertes Teil-Messsignal beider Messkanäle umfassen. Addierelement 2 und erstes und zweites Register 4 und 5 sind dem entsprechend zur Verarbeitung bzw. Speicherung (t+ld(n+m))-stelliger Datenwörter ausgelegt. Ein Korrekturzyklus der Elemente 2 und 4 dauert also n+m Takte und umfasst einen Umschaltvorgang des Multiplexers 7 durch Phasensignal 71.

## Patentansprüche

1. Elektronische Schaltung zur Korrektur zumindest eines digitalen Messsignals (ΣΔₙ,ΣΔ1,ΣΔ2), welche zumindest einen Messkanal mit einem Sigma-Delta-Modulator, der ein analoges Messsignal in ein digitales Messsignal in Form einer binären Wertefolge umwandelt, und eine Korrekturschaltung (1) aufweist, welche das digitale Messsignal (ΣΔ1,ΣΔ1,ΣΔ2) in Abhängigkeit wenigstens eines Korrekturdatums (trim) korrigiert, **dadurch gekennzeichnet, dass** die Korrekturschaltung (1) mindestens ein Addierelement (2) und wenigstens einen Multiplexer (3) umfasst, wobei das digitale Messsignal korrigiert wird, indem das Korrekturdatum (trim) mittels des Multiplexers (3,6) und des Addierelements (2,11,13) in Abhängigkeit des digitalen Messsignals (ΣΔₙ,ΣΔ1,ΣΔ2) gewichtet wird.

2. Elektronische Schaltung nach Anspruch 1, **dadurch gekennzeichnet, dass** das Korrekturdatum (trim) ein Korrekturfaktor ist.

3. Elektronische Schaltung nach Anspruch 1 oder 2, **dadurch gekennzeichnet, dass** diese Teil eines elektronischen Reglers für Kraftfahrzeugregelungssysteme ist und der Sigma-Delta-Modulator ein analoges Messsignal eines Laststroms, welcher durch eine im Wesentlichen induktive Last einer Ventilansteuerungsschaltung fließt, in ein digitales Messsignal umwandelt, wobei die Ventilansteuerungsschaltung diesen Laststrom mittels einer Puls-Weiten-Modulation regelt und wobei das analoge Messsignal direkt oder indirekt durch zumindest einen Sense-FET bereitgestellt wird.

4. Elektronische Schaltung nach mindestens einem der Ansprüche 1 bis 3, **dadurch gekennzeichnet, dass** das Korrekturdatum (trim) und ein binäres Null-Wort (null) an den Eingängen des Multiplexers (3,6) anliegen und das digitale Messsignal (ΣΔₙ,ΣΔ1,ΣΔ2) den Selekteingang des Multiplexers (3,6) ansteuert, wobei der Ausgang des Multiplexers mit einem ersten Eingang (21) des Addierelements (2) direkt oder indirekt verbunden ist und die Korrekturschaltung (1) zusätzlich ein erstes Register (4) aufweist, dessen Eingang mit dem Ausgang des Addierelements (2) und dessen Ausgang mit einem zweiten Eingang (22) des Addierelements (2) verbunden ist.

5. Elektronische Schaltung nach Anspruch 4, **dadurch gekennzeichnet, dass** das digitale Messsignale in digitale Teil-Messsignale (ΣΔₙ,ΣΔ1,ΣΔ2) unterteilbar ist, welche jeweils eine binäre Wertefolge definierter Länge umfassen, und die Anzahl der Takte (n,2n), in welchen die Korrekturschaltung das jeweilige digitale Teil-Messsignals korrigiert, der Anzahl (t) der binären Stellen des Korrekturdatums (trim) entspricht.

6. Elektronische Schaltung nach Anspruch 5, **dadurch gekennzeichnet, dass** das jeweilig korrigierte digitale Teil-Messsignal, welches am Ende eines jeweiligen Korrekturzyklus im ersten Register (4) gespeichert ist, in einem zweitem Register (5) gespeichert wird und der Speicherinhalt des ersten Registers (4) im Wesentlichen gleichzeitig zur Durchführung eines neuen, nachfolgenden Korrekturzyklus mittels eines Rücksetzeingangs (41) zurückgesetzt und/oder gelöscht wird, der in Abhängigkeit des Anlegens eines neuen, nachfolgenden digitalen Teil-Messsignals (ΣΔₙ,ΣΔ1,ΣΔ2) an den Selekteingang des Multiplexers (3,6), angesteuert wird.

7. Elektronische Schaltung nach mindestens einem der Ansprüche 1 bis 6, **dadurch gekennzeichnet, dass** diese zwei Messkanäle aufweist, deren digitale Messsignale, welche jeweils digitale Teil-Messsignale (ΣΔₙ,ΣΔ1,ΣΔ2) in Form binärer Wertefolgen definierter Länge umfassen, an die Korrekturschaltung (1) übertragen werden, welche einen ersten (3), einen zweiten (6) und einen dritten (7), gemeinsamen Multiplexer sowie zumindest ein Addierelement (2) und ein erstes Register (4) umfasst, wobei das jeweilige digitale Teil-Messsignal (ΣΔ1) des ersten Kanals den Selekteingang des ersten Multiplexers (3) und das jeweilige digitale Teil-Messsignal (ΣΔ2) des zweiten Kanals den Selekteingang des zweiten Multiplexers (6) ansteuert, an deren Eingängen jeweils das Korrekturdatum (trim) und ein binäres Null-Wort (null) anliegen, wobei die Ausgänge des ersten (3) und des zweiten (6) Multiplexers an den Eingängen des dritten Multiplexers (7) anliegen, dessen Selekteingang von einem Phasensignal (71) angesteuert wird und dessen Ausgang mit dem ersten Eingang (21) des Addierelements (2) verbunden ist, wobei der zweite Eingang (22) des Addierelements (2) mit dem Ausgang des ersten Registers (4) verbunden ist und der Ausgang des Addierelements (2) mit dem Eingang des ersten Registers (4).

8. Elektronische Schaltung nach Anspruch 3 und 7, **dadurch gekennzeichnet, dass** der erste Messkanal einem Einschaltpfad und der zweite Messkanal einem Rezirkulationspfad der oder einer der Puls-Weiten-Modulations-Ventilansteuerungsschaltung/en zugeordnet ist und der zeitliche Verlauf des Phasensignals (71) vom zeitlichen Verlauf der Puls-Weiten-Modulation abhängig ist, wobei der dritte, gemeinsame Multiplexer (7) insbesondere im Wesentlichen abwechselnd angesteuert wird und eine Korrektur der digitalen Messsignale beider Messkanäle ermöglicht.

9. Elektronische Schaltung nach Anspruch 8, **dadurch gekennzeichnet, dass** die Korrekturschaltung (1) zusätzlich jeweils ein dem Ausgang des ersten Multiplexers (3) und dem Ausgang des zweiten Multiplexers (6) nachgeschaltetes Addierelement (11,13) und Register (12,14) zur zusätzlichen separaten Korrektur der digitalen Messsignale des ersten und des zweiten Messkanals aufweist.

10. Verwendung der elektronischen Schaltung gemäß mindestens einem der Ansprüche 1 bis 9 in einem Kraftfahrzeugbremssystem.

## Claims

1. Electronic circuit for correcting at least one digital measurement signal (ΣΔₙ, ΣΔ1, ΣΔ2), which circuit has at least one measurement channel with a sigma-delta modulator, which converts an analog measurement signal to a digital measurement signal in the form of a binary value sequence, and a correction circuit (1) which corrects the digital measurement signal (ΣΔₙ, ΣΔ1, ΣΔ2) as a function of at least one correction data item (trim), **characterized in that** the correction circuit (1) has at least one adding element (2) and at least one multiplexer (3), wherein the digital measurement signal is corrected by weighting the correction data item (trim) by means of the multiplexer (3, 6) and the adding element (2, 11, 13), as a function of the digital measurement signal (ΣΔₙ, ΣΔ1, ΣΔ2).

2. Electronic circuit according to Claim 1, **characterized in that** the correction data item (trim) is a correction factor.

3. Electronic circuit according to Claim 1 or 2, **characterized in that** this circuit is part of an electronic regulator for motor vehicle control systems, and the sigma-delta modulator converts an analog measurement signal of a load current, which flows through an essentially inductive load on a valve operating circuit, to a digital measurement signal, wherein the valve operating circuit regulates this load current by means of pulse-width modulation, and wherein the analog measurement signal is provided directly or indirectly by at least one sense FET.

4. Electronic circuit according to at least one of Claims 1 to 3, **characterized in that** the correction data item (trim) and a binary null word (null) are applied to the inputs of the multiplexer (3, 6), and the digital measurement signal (ΣΔₙ, ΣΔ1, ΣΔ2) operates the select input of the multiplexer (3, 6), wherein the output of the multiplexer is connected directly or indirectly to a first input (21) of the adding element (2), and the correction circuit (1) additionally has a first register (4), whose input is connected to the output of the adding element (2), and whose output is connected to a second input (22) of the adding element (2).

5. Electronic circuit according to Claim 4, **characterized in that** the digital measurement signal can be subdivided into digital partial measurement signals (ΣΔₙ, ΣΔ1, ΣΔ2) which each comprise a binary value sequence of defined length, and the number of clock cycles (n, 2n) in which the correction circuit corrects the respective digital partial measurement signal corresponds to the number (t) of binary digits in the correction data item (trim).

6. Electronic circuit according to Claim 5, **characterized in that** the respectively corrected digital partial measurement signal, which is stored in the first register (4) at the end of a respective correction cycle, is stored in a second register (5), and the store content of the first register (4) is reset and/or deleted by means of a reset input (41) essentially simultaneously in order to carry out a new, subsequent correction cycle, which reset input (41) is operated as a function of the application of a new, subsequent digital partial measurement signal (ΣΔₙ, ΣΔ1, ΣΔ2) to the select input of the multiplexer (3, 6).

7. Electronic circuit according to at least one of Claims 1 to 6, **characterized in that** this circuit has two measurement channels, whose digital measurement signals, which each comprise digital partial measurement signals (ΣΔₙ, ΣΔ1, ΣΔ2) in the form of binary value sequences of defined length, are transmitted to the correction circuit (1), which comprises a first multiplexer (3), a second multiplexer (6) and a third, common multiplexer (7) as well as at least one adding element (2) and a first register (4), where the respective digital partial measurement signal (ΣΔ1) in the first channel operates the select input of the first multiplexer (3), and the respective digital partial measurement signal (ΣΔ2) in the second channel operates the select input of the second multiplexer (6), to whose inputs the correction data item (trim) and a binary null value (null) are in each case applied, wherein the outputs of the first multiplexer (3) and of the second multiplexer (6) are applied to the inputs of the third multiplexer (7), whose select input is operated by a phase signal (71) and whose output is connected to the first input (21) of the adding element (2), wherein the second input (22) of the adding element (2) is connected to the output of the first register (4), and the output of the adding element (2) is connected to the input of the first register (4).

8. Electronic circuit according to Claims 3 and 7, **characterized in that** the first measurement channel is associated with a switch-on path, and the second measurement channel is associated with a recirculation path, of the or one of the pulse-width modulation valve operating circuit or circuits, and the time profile of the phase signal (71) is dependent on the time profile of the pulse-width modulation, wherein the third, common multiplexer (7) is, in particular, operated essentially alternately and allows correction of the digital measurement signals in both measurement channels.

9. Electronic circuit according to Claim 8, **characterized in that** the correction circuit (1) additionally in each case has an adding element (11, 13), which is connected downstream from the output of the first multiplexer (3) and the output of the second multiplexer (6), and registers (12, 14) for additional separate correction of the digital measurement signals in the first and the second measurement channels.

10. Use of the electronic circuit according to at least one of Claims 1 to 9 in a motor vehicle braking system.

## Revendications

1. Circuit électronique destiné à corriger au moins un signal de mesure numérique (ΣΔₙ, ΣΔ1, ΣΔ2), lequel présente au moins un canal de mesure doté d'un modulateur sigma-delta, lequel convertit un signal de mesure analogique en un signal de mesure numérique sous la forme d'une série de valeurs binaires, ainsi qu'un circuit de correction (1) qui corrige le signal de mesure numérique (ΣΔₙ, ΣΔ1, ΣΔ2) en fonction d'au moins une référence de correction (trim), **caractérisé en ce que** le circuit de correction (1) comprend au moins un élément additionneur (2) et au moins un multiplexeur (3), le signal de mesure numérique étant corrigé **en ce que** la référence de correction (trim) est pondérée à l'aide du multiplexeur (3, 6) et de l'élément additionneur (2, 11, 13) en fonction du signal de mesure numérique (ΣΔₙ, ΣΔ1, ΣΔ2).

2. Circuit électronique selon la revendication 1, **caractérisé en ce que** la référence de correction (trim) est un facteur de correction.

3. Circuit électronique selon la revendication 1 ou 2, **caractérisé en ce que** celui-ci est une partie d'un régulateur électronique pour des systèmes de régulation de véhicule automobile et le modulateur sigma-delta convertit un signal de mesure analogique d'un courant de charge, lequel circule à travers une charge sensiblement inductive d'un circuit de commande de vanne, en un signal de mesure numérique, le circuit de commande de vanne régulant ce courant de charge au moyen d'une modulation d'impulsions en largeur et le signal de mesure analogique étant délivré directement ou indirectement par le biais d'au moins un FET de détection.

4. Circuit électronique selon au moins l'une des revendications 1 à 3, **caractérisé en ce que** la référence de correction (trim) et un mot nul binaire (null) sont appliqués aux entrées du multiplexeur (3, 6) et le signal de mesure numérique (ΣΔₙ, ΣΔ1, ΣΔ2) commande l'entrée de sélection du multiplexeur (3, 6), la sortie du multiplexeur étant reliée directement ou indirectement avec une première entrée (21) de l'élément additionneur (2) et le circuit de correction (1) présentant en plus un premier registre (4) dont l'entrée est reliée avec la sortie de l'élément additionneur (2) et dont la sortie est reliée avec une deuxième entrée (22) de l'élément additionneur (2).

5. Circuit électronique selon la revendication 4, **caractérisé en ce que** le signal de mesure numérique peut être subdivisé en signaux de mesure partiels numériques (ΣΔₙ, ΣΔ1, ΣΔ2), lesquels comprennent respectivement une série de valeurs binaires de longueur définie, et le nombre de cycles (n, 2n) au cours desquels le circuit de correction corrige le signal de mesure partiel numérique correspondant correspond au nombre (t) de positions binaires de la référence de correction (trim).

6. Circuit électronique selon la revendication 5, **caractérisé en ce que** le signal de mesure partiel numérique corrigé correspondant, lequel est enregistré dans le premier registre (4) à la fin d'un cycle de correction correspondant, est enregistré dans un deuxième registre (5) et le contenu mis en mémoire du premier registre (4) est réinitialisé et/ou effacé sensiblement simultanément avec l'exécution d'un nouveau cycle de correction suivant au moyen d'une entrée de réinitialisation (41), laquelle est commandée en fonction de l'application d'un nouveau signal de mesure partiel numérique (ΣΔₙ, ΣΔ1, ΣΔ2) suivant à l'entrée de sélection du multiplexeur (3, 6).

7. Circuit électronique selon au moins l'une des revendications 1 à 6, **caractérisé en ce que** celui-ci présente deux canaux de mesure dont les signaux de mesure numériques, lesquels incluent respectivement des signaux de mesure partiels numériques (ΣΔₙ, ΣΔ1, ΣΔ2) sous la forme de séries de valeurs binaires de longueur définie, sont transmis au circuit de correction (1), lequel comprend un premier (3), un deuxième (6) et un troisième (7) multiplexeur commun ainsi qu'au moins un élément additionneur (2) et un premier registre (4), le signal de mesure partiel numérique (ΣΔ1) correspondant du premier canal commandant l'entrée de sélection du premier multiplexeur (3) et le signal de mesure partiel numérique (ΣΔ2) correspondant du deuxième canal commandant l'entrée de sélection du deuxième multiplexeur (6), aux entrées desquels sont respectivement appliquées la référence de correction (trim) et un mot nul binaire (null), les sorties du premier (3) et du deuxième (6) multiplexeur étant appliquées aux entrées du troisième multiplexeur (7) dont l'entrée de sélection est commandée par un signal de phase (71) et dont la sortie est reliée avec la première entrée (21) de l'élément additionneur (2), la deuxième entrée (22) de l'élément additionneur (2) étant reliée avec la sortie du premier registre (4) et la sortie de l'élément additionneur (2) avec l'entrée du premier registre (4).

8. Circuit électronique selon les revendications 3 et 7, **caractérisé en ce que** le premier canal de mesure est associé à un chemin de mise en circuit et le deuxième canal de mesure à un chemin de recyclage du ou de l'un des circuit (s) de commande de vanne à modulation d'impulsions en largeur et le tracé dans le temps du signal de phase (71) dépend du tracé dans le temps de la modulation d'impulsions en largeur, le troisième multiplexeur commun (7) étant notamment commandé sensiblement en alternance et rendant possible une correction des signaux de mesure numériques des deux canaux de mesure.

9. Circuit électronique selon la revendication 8, **caractérisé en ce que** le circuit de correction (1) présente en plus à chaque fois un élément additionneur (11, 13) et un registre (12, 14) branchés à la suite de la sortie du premier multiplexeur (3) et de la sortie du deuxième multiplexeur (6) pour une correction séparée supplémentaire des signaux de mesure numériques du premier et du deuxième canal de mesure.

10. Utilisation du circuit électronique selon au moins l'une des revendications 1 à 9 dans un système de freinage de véhicule automobile.
